Europäisches Patentamt

European Patent Office

Office européen des brevets

(19)

(11) Publication number: **0 127 569**
**B1**

(12)

# EUROPEAN PATENT SPECIFICATION

(45) Date of publication of patent specification: **12.08.87**

(21) Application number: **84730051.4**

(22) Date of filing: **17.05.84**

(51) Int. Cl.⁴: **C 04 B 26/08,** C 04 B 38/00,
C 04 B 38/02

(54) Method for preparing inorganic foamed materials.

(30) Priority: **23.05.83 JP 90169/83**

(43) Date of publication of application:
**05.12.84 Bulletin 84/49**

(45) Publication of the grant of the patent:
**12.08.87 Bulletin 87/33**

(84) Designated Contracting States:
**CH DE FR GB LI**

(56) References cited:
**FR-A-2 252 313**
**FR-A-2 390 399**

(73) Proprietor: **Fuji Kasei Kogyo Kabushiki Kaisha
1241-1, Ohtono Kishimoto-cho
Saihaku-gun Tottori Pref. (JP)**

(72) Inventor: **Kasahara, Kanesuke
35-17, Tobio 1-chome
Atsugi City Kanagawa Pref. (JP)**
Inventor: **Asami, Tsutomu
373-3, Yorii-machi
Ohsato-gun Saitama Pref. (JP)**

(74) Representative: **Meissner, Peter E., Dipl.-Ing.
et al
Herbertstrasse 22
D-1000 Berlin 33 (DE)**

Courier Press, Leamington Spa, England.

**Description**

The present invention relates to a method for preparing inorganic foamed materials.

The foamed materials having closed cells are lightweight and excellent in heat insulating properties, therefore they are widely utilized as heat insulating materials for a variety of apparatuses and buildings. Of these materials, vinyl chloride resin foamed materials are particularly excellent in chemical resistance and mechanical strength and are thus now extensively used. However, these vinyl chloride resin foamed materials, though being fire retardant, are not incombustible. Further, they are relatively weak when heated and have the fault that if put in a high-temperature atmosphere, they will contract their volumes, and the other fault that particularly if brought into contact with a flame, they will generate a poisonous gas. In view of such facts, foamed material has now been developed which can be prepared by mixing inorganic powder with the vinyl chloride resin and foaming the resulting mixture. Such a development contemplates adding, to the features of the above-mentioned organic foamed material i.e. the lightweight and the heat insulating properties, the characteristic that if heated, the material will less contract its volume; the characteristics that when brought into contact with a flame, it will render the hydrogen chloride gas non-toxic; and the other characteristic that it is made more fire retardant. As examples of such inorganic filler-containing foamed materials, there are known, a material which is obtained by mixing the inorganic filler including water of crystallation in its molecules with the vinyl chloride resin and heating the resulting mixture to generate water vapor and to thereby cause a foaming; and a material which is obtained by kneading the vinyl chloride resin, the inorganic filler and a solvent in a sealed kneader while heating, adding thereto a solvent including liquefied butane, and carrying out a thermal foaming in a mold (Japanese Patent Publ., SHO—53—7344).

In the former case of these foamed materials, however, when a great deal of inorganic filler is mixed therewith, its uniform dispersion and foaming cannot be accomplished, and a so-called venting phenomenon will occur, with the result that any satisfactory foamed material cannot be obtained. For this reason, it is impossible to blend 25% or more of the inorganic filler therewith.

Further, in the latter case of the above-mentioned materials, 40% or more of the inorganic filler can be blended therewith subject to adding the liquefied butane or the like thereto in order to permit a kneading and to thereby cause them to gel, whereby the apparently satisfactory foamed material can be obtained. In this case, however, at least 25% of vinyl chloride resin is required to obtain such a foamed material. Therefore, it is difficult to restrain the generation of the harmful gas at the time of exposing the material to a flame, and to render the material incombustible. Further, the thus obtained material is disadvantageously poor in workability and shape stability.

The inventors of the present case have conducted researches with the intention of overcoming the above-mentioned problems and drawbacks, and as a result, they have succeeded in obtaining an excellent foamed material by employing the inorganic filler as a base material, adding thereto the vinyl chloride resin, zinc oxide, a foaming agent and a plasticizer and kneading them, and carrying out a thermal foaming, even when it includes a large amount inorganic filler. The thus obtained foamed material is incombustible and lightweight, and has sufficient heat insulating properties, water resistance, sound absorbing qualities and mechanical strength. In this foamed material, the coating film of the vinyl chloride resin of the components is uniformed and strengthened by the added zinc oxide, therefore at a stage of hardening after foaming, plasticizing is easy and also press forming by reheating after hardening is easy.

The present invention resides in a method for preparing an inorganic foamed material by kneading an inorganic filler with vinyl chloride resin, zinc oxide, a foaming agent and a plasticizer in order to obtain a compound, and thermally foaming said compound in a mold. An effective blending proportion in the above-mentioned method is 50 to 80 parts by weight of the inorganic filler, 5 to 15 parts by weight of the vinyl chloride resin, and 15 to 35 parts by weight of the zinc oxide.

The inorganic fillers used in the method for preparing the foamed material according to the present invention are hydroxides, carbonates, sulfates and silicates of calcium, magnesium and aluminum, as well as their compounds, containing water of crystallization. Examples of them include calcium hydroxide $Ca(OH)_2$, magnesium hydroxide $Mg(OH)_2$, aluminum hydroxide $Al(OH)_3$, calcium carbonate $CaCO_3$, magnesium carbonate $MgCO_3$, calcium silicate ($3CaO \cdot SiO_2$ and $Ca_2SiO_3$), magnesium silicate ($Mg_2SiO_4$, $MgSiO_3$, $Mg_3Si_4O_{11} \cdot H_2O$, and $2MgO \cdot 3SiO_2 \cdot nH_2O$) and aliminum silicate ($Al_2SiO_3$, $Al_4(SiO_4)_3 \cdot 5H_2O$ and $3Al_2O_3 \cdot 2SiO_2$) as well as asbestos, talc, bentonite and clay. They can be employed alone or in the form of a mixture of two or more kinds thereof.

The particle size of these materials is an important factor in determining the amount of the plasticizer which is adsorbed by the particles of said materials. For example, in the case of talc $\{Mg_3H_2(SiO_3)_4\}$, its particle size is preferably such that 90% or more pass through a 150-mesh (hole size 0.105 mm) sieve, so as to improve its dispersion. In the case of calcium carbonate, its particle size is preferably distributed within the range of 70 to 200 mesh (hole size 0,20 to 0,075 mm) so that it may be reacted with hydrogen chloride generated by the combustion of the vinyl chloride resin in order to render the hydrogen chloride non-toxic and so that the adhesion between the vinyl chloride resin and the plasticizer may be improved. Further, with regard to the aluminum hydroxide which serves to enhance incombustibility, its suitable particle size is 300 mesh (hole size 0,050 mm) or less.

A blending proportion of the inorganic filler and the vinyl chloride resin can be 50 to 80 parts by weight

# 0 127 569

of the former with respect to 5 to 15 parts of weight of the latter, preferably 70 parts by weight of the former with respect to 8 parts by weight of the latter. If the content of the vinyl chloride resin is less than indicated above, any sufficient foaming will scarcely be accomplished, and any satisfactory mechanical strength will not be obtained, so that the manufactured material will be brittle. In contrast, if the content of the vinyl chloride resin is more than indicated above, it will be difficult to obtain the foamed material having a good non-combustibility and heat resistance which are aimed by the present invention. Also said vinyl chloride should preferably be a paste resin such that it has a distribution of particles necessary for permitting said vinyl chloride resin to pass all through a 325-mesh (hole size 0,045 mm), in order to ensure a suitable amount of plasticizer and maintain a close relation between the vinyl chloride resin and inorganic filler.

Further, the zinc oxide may be employed in a proportion of 15 to 35 parts by weight, preferably 25 parts by weight or so based on 50 to 80 parts by weight of the inorganic filler and 5 to 15 parts by weight of the vinyl chloride resin. This zinc oxide functions as a catalyst and serves to permit a uniform and stable foaming behavior of the mixture in which the inorganic filler and small amounts of the vinyl chloride resin are blended, with the result that the mechanical strength of the foamed material, the working properties of a press molding under re-heating and the like can be improved to a remarkable degree. It would be considered that this fact results from the mechanism that a dechlorination reaction is brought about in the molecules of the vinyl chloride resin by the zinc oxide to produce zinc chloride, and a combination of each two free radicals of the dechlorinated vinyl chloride resin or an addition of the free radicals to double bonds in other molecular chains causes a crosslinking reaction to occur. As a result, the strength and the viscosity of the vinyl chloride resin are improved. Moreover, even when extremely small amounts of the vinyl chloride resin are added to the inorganic filler, a sufficient foaming constitution can be obtained, and the foamed material can be prepared which has a great mechanical strength and which can facilitate a press molding operation under re-heating.

Of the above-mentioned fillers, hydroxides such as the magnesium hydroxide and the aluminum hydroxide as well as the compounds containing water of crystallization are decomposed by virtue of the applied heat and are reacted with the hydrogen chloride generated by the combustion of the vinyl chloride resin in order to change into chlorides and water. In consequence, a combustion temperature affected by the vinyl chloride resin will be lowered and the incombustibility of the prepared material will thus be improved. The generated chlorine gas is converted into chlorides such as aluminum chloride and magnesium chloride by the reaction in order to be rendered non-toxic and these chlorides are not decomposed any more by the combustion temperature.

When the hydroxide or the compound including water of crystallization is included in the inorganic filler in amounts of 15 to 35 parts by weight based on its whole weight, the foamed material can be made incombustible.

As the foaming agents, there can be employed DPT (dinitrosopentamethylenetetramine), AC (azicarbonamide), AIBN (azobisisobutyronitrile) and the like which are organic foaming agents; sodium bicarbonate, ammonium chloride and the like which are inorganic foaming agents, and Freon and the like which are gaseous. As the plasticizers, there can be employed aromatic temporary plasticizers such as toluene and the like as well as incombustible plasticizers such as paraffin chlorides.

The aforementioned foaming agent can be properly used in a proportion of 10 to 16 parts by weight based on 100 parts by weight of the inorganic filler, the vinyl chloride resin and the zinc oxide, and the plasticizer can be used in a proportion of 50 parts by weight or so based on the same.

Further, in the foamed material of the present invention, there may be included a thermal stabilizer, an ultraviolet absorber, an antioxidant, a fire retardant, a reinforcing filler, an incombustible dye and pigment, an antistatic agent, a fungicide and other suitable additives, in addition to the above-mentioned essential components.

The foamed material can be prepared in accordance with the present invention as follows: The inorganic material such as calcium carbonate, talc, asbestos, or the like, the vinyl chloride resin and the foaming agent are placed in a mixer in the aforementioned proportion and are mixed with each other. Then, 50 parts by weight of the total weight of the plasticizer are added to the resulting mixed powder, and a kneading operation is carried out by means of a suitable kneader at a low-speed rotation at ordinary temperature and at ordinary pressure. Further, the hydroxide such as aluminum hydroxide or the incombustibility improving filler which includes water of crystallization is added to the resulting compound in the aforementioned proportion, and a kneading operation is carried out again. To the compound is further added the remaining 50 parts by weight of the plasticizer in order to obtain the paste compound. Afterwards, heat is applied to a mold including the compound therein at least up to a temperature at which the used foaming agent is decomposed or vaporized, and up to a temperature at which the vinyl chloride resin is caused to gel. As a result, the vinyl chloride resin is dissolved in the solvent (plasticizer), and the fine particles of the inorganic filler are throughout wrapped in the dissolved resin, whereby the resin adheres to the fine particles and connects them to each other adhesively. At this time, the vinyl chloride resin reacts with the zinc oxide to heighten the viscosity and the strength of its coating films embracing the fine particles. Therefore, even though the amount of the vinyl chloride resin is small, the fine particles of the inorganic filler are completely wrapped in the resin, and the fine particles adhere to each other and take a gel state. After the foaming agent has been decomposed or vaporized under this gelation, the heating operation is stopped, and cooling is then carried out while the mold is kept closed. After a while, the mold is

3

**0 127 569**

opened to release the pressure therein. Immediately, the contents in the mold thereby bring about a primary foaming, so that its volume is increased two to five times. Then, the primarily foamed material is heated in a warm air circulating device such as an oven in order to bring about a secondary foaming. As a result, the volume of the material is finally increased 4 to 30 times as much as its original, thereby obtaining the desired foamed product.

According to the present invention, even if the amount of the vinyl chloride resin is extremely small, the added zinc oxide permits the viscosity of the coating film to increase and the film itself to strengthen. Generally, when the content of the inorganic filler is approximately 90%, a thermal plasticity will be lost. With regard to the foamed material prepared in accordance with the present invention, however, its complete thermal plasticity can still remain. Thus, the uncured foamed material which is the aimed product can very easily be sliced, if necessary, in pieces each having a desired size. Further, the soft uncured foamed material can easily be deformed in accordance with a shape of a selected specific mold only by putting it on the mold and can be then cured.

Accordingly, the molding of the material into, e.g., a wave-like shape can easily be accomplished.

Moreover, the foamed material which has once been molded into a shape such as a plate can easily be plasticized due to the improvement properties of the vinyl chloride resin by reheating it afterward. Therefore, the foamed material has the highly characteristic property that a heating press molding and a post-forming can be carried out.

Since composed of the inorganic filler as the main component and the closed cells, the foamed material obtained through the present invention is lightweight, and has heat insulating properties, sound absorbing qualities and water resistance, and is excellent in mechanical strength and dimensional stability. Additionally, the foamed material is particularly incombustible, therefore it can widely be utilized as a building material, an interior material for a car, a constitutional material for a device, an electrical insulating material and an electromagnetic shielding material as well as a heat insulating material, without any additional treatment. Coloring can be accomplished by previously adding thereto an incombustible pigment or dyestuff, or by applying it to the outer surface of the foamed material. Further, even when exposed to a high temperature, for example, at a fire, the generated hydrogen chloride gas will be extremely small, therefore there is little danger of the generation of the poisonous gas.

Furthermore, if a temporary plasticizer is used, in the manufacturing method according to the present invention, a hard foamed material can be obtained; if a plasticizer is utilized, which remains even after the foaming, a soft foamed material can be obtained.

Now, the present invention will be described in reference to an example as follows:

| | | |
|---|---|---|
| Calcium carbonate | 24 parts by weight | |
| Talc | 15 parts by weight | |
| Aluminium hydroxide | 20 parts by weight | 100 parts by weight |
| Asbestos | 3 parts by weight | |
| Vinyl chloride resin | 12 parts by weight | |
| Zinc oxide | 26 parts by weight | |
| DPT (dinitrosopentamethylentetramine) | 10 parts by weight | |
| Sodium bicarbonate | 3 parts by weight | |
| Toluene | 40 parts by weight | |

A blend of the aforementioned composition was kneaded at ordinary temperature for about 60 minutes to prepare a paste compound. The prepared compound was fed to a transfer mold, and the mold was airtightly closed so as not to allow a gas to leak. Then, heating was stepwise carried out toward a foaming temperature of the foaming agent and a dissolving temperature of the vinyl chloride resin up to about 170C. Afterward, the mold was cooled slowly up to room temperature and was then opened, whereby the foamed molded material brought about a primary foaming, thereby increasing its volume about twofold. This foamed material was then sliced in pieces each having a thickness of 50 mm, and they were put in an oven and were allowed to stand for 8 hours for the sake of a free foaming. With regard to the thus obtained secondary foamed material, a foam swelling ratio was about 8 times as much as its original, a specific gravity was 0.1778, and a water absorption was 2.34 g/100 cm$^3$ (the size of each sample was $70 \times 70 \times 10$ mm) at 22°C and RH of 50%. Further, a $40 \times 40 \times 50$ mm sample of the secondary foamed article, i.e. the foamed material obtained by the present invention was heated in the oven at a temperature of 750°C for 20 minutes in accordance with a JIS fire retardant testing method (JISA 1321). As a result, the combustion temperature of the sample fell once to 660°C after about 15 seconds, reached a maximum level of 765°C after 4 minutes, and got to a constant level of 750°C after 10 minutes. The reason why the combustion temperature fell once at the early stage is that the hydroxyl groups of the aluminum hydroxide in the inorganic filler were thermally decomposed and absorbed the combustion heat of the vinyl chloride resin. By virtue of this phenomenon, the temperature rise as a whole could be restrained so that it could remain below the standard value (800°C) regulated at JIS A 1321. Furthermore, when a $220 \times 220 \times 15$ mm example was heated for 10 minutes, a temperature curve of its exhaust gas showed, for 3 minutes at an early stage, 20 to 40°C lower values than on a standard temperature curve, and after that, it indicated values substantially comparable to the standard curve. Moreover, with regard to smoke amounts, according to results of a prescribed measurement, its smoke coefficient per unit area was 12 CA at maximum. Other dangerous factors at a fire, e.g., deformation, dissolution and cracks did not occur, any harmful gas to human beings was not generated, and after the heating was over, the remaining flame was also extinguished.

## Claims

1. A method of manufacturing an inorganic foamed material by kneading an inorganic filler with a vinyl chloride resin, a foaming agent and a plasticizer to produce a compound and foaming said compound by heating in a metal mold, characterized in that the mixture which is kneaded also comprises zinc oxide.

2. A method of manufacturing an inorganic foamed material as claimed in clain 1, characterized by kneading 50—80 parts by weight, of an inorganic filler, 5—15 parts by weight vinyl chloride resin, and 15—35 parts by weight zinc oxide.

## Patentansprüche

1. Verfahren zum Herstellen eines anorganischen Schaumstoffes, indem ein anorganischer Füllstoff mit Vinylchloridharz, einem Schaummittel und einem Plasticizierungsmittel zur Herstellung einer Verbindung durchgeknetet wird und die Verbindung durch Erwärmen in einer Metallform geschäumt wird, dadurch gekennzeichnet, daß die durchgeknetete Mischung auch Zinkoxid enthält.

2. Verfahren zum Herstellen eines anorganischen Schaumstoffes nach Anspruch 1, gekennzeichnet durch Kneten von 50 bis 80 Gewichtsteilen eines anorganischen Füllstoffes, 5 bis 15 Gewichtsteile Vinylchloridharz und 15 bis 35 Gewichtsteile Zinkoxid.

## Revendication

1. Procédé de fabrication d'un matériau mousse inorganique en malaxant une matière de remplissage inorganique avec une résine de chlorure de vinyle, un agent de moussage et un agent plastifiant pour produire un composé, et en faisant mousser ledit composé par chauffage dans un moule métallique, caractérisé en ce que le mélange qui est malaxé comprend également de l'oxyde de zinc.

2. Procédé de fabrication d'un matériau mousse inorganique selon la revendication 1, caractérisé par le malaxage de 50 à 80 parties en poids d'une matière de remplissage inorganique, de 5 à 15 parties en poids d'une résine de chlorure de vinyle et de 15 à 35 parties en poids d'oxyde de zinc.

5